# FASCICULE DE BREVET EUROPEEN

(11) **EP 1 955 389 B1**
(45) Date de publication et mention de la délivrance du brevet: **12.10.2011**
(21) Numéro de dépôt: 06842015.7
(22) Date de dépôt: 21.11.2006
(51) Int. Cl.: H01M 2/10

(54) **MODULE DE GENERATION D'ELECTRICITE COMPRENANT UNE PLURALITE DE CELLULES ELECTROCHIMIQUES**
ELEKTRIZITÄTSERZEUGUNGSMODUL MIT MEHREREN ELEKTROMECHANISCHEN ZELLEN
ELECTRICITY GENERATION MODULE INCLUDING A PLURALITY OF ELECTROCHEMICAL CELLS

(30) Priorité: 02.12.2005 FR 0512252
(43) Date de publication de la demande: 13.08.2008
(73) Titulaire: RENAULT S.A.S., 92100 Boulogne Billancourt (FR)
(72) Inventeur: ORIGUCHI, Masato, F-78120 Rambouillet (FR); ORSINI, François, F-91300 Massy (FR)
(86) Numéro de dépôt international: PCT/FR2006/051204
(87) Numéro de publication internationale: WO 2007/063234

(56) Documents cités:
- US-A1- 2003 118 898
- US-B1- 6 689 510
- PATENT ABSTRACTS OF JAPAN vol. 2003, no. 12, 5 décembre 2003 (2003-12-05) -& JP 2005 302501 A (UCHIYAMA MFG CORP; NEC LAMILION ENERGY LTD), 27 octobre 2005 (2005-10-27)
- PATENT ABSTRACTS OF JAPAN vol. 2003, no. 12, 5 décembre 2003 (2003-12-05) -& JP 2005 302698 A (NISSAN MOTOR CO LTD), 27 octobre 2005 (2005-10-27)

## Description

La présente invention concerne le domaine des modules de génération d'électricité pour véhicule automobile, et en particulier un module de génération d'électricité comprenant une pluralité de cellules électrochimiques et convenant à un véhicule électrique ou à un véhicule hybride.

Un véhicule à propulsion ou traction hybride est généralement équipé d'un moteur de traction à combustion interne et d'un moteur de traction électrique qui est alimenté par un module de génération d'électricité embarqué à bord du véhicule, et ce, de manière à pouvoir utiliser plusieurs sources d'énergie.

De tels modules de génération d'électricité, ou batteries, pour véhicules hybrides ou électriques peuvent être pourvus d'une pluralité d'ensembles identiques. Chaque ensemble comprend des cellules élémentaires électrochimiques permettant de produire de l'énergie électrique par des réactions chimiques se produisant aux électrodes.

De telles cellules élémentaires électrochimiques sont particulièrement avantageuses tant sur le plan énergétique qu'économiquement. Toutefois, chacune de ces cellules présentent une épaisseur ainsi qu'une résistance mécanique relativement faibles, ce qui peut rendre difficile leur assemblage et leur positionnement relatifs lors de la fabrication des modules.

Différentes solutions ont déjà été imaginées pour faciliter l'obtention de tels modules, par exemple tels que présentés dans les documents JP-A1-2005-302501 et JP-A1-2005-302698. L'abrégé de la demande de brevet JP-A1-2004-227921 décrit par ailleurs un support pour des cellules élémentaires électrochimiques empilées pourvu de moyens d'appui inférieur et supérieur. Chaque moyen d'appui comprend deux barres rectilignes assemblées entré elles de manière à former une croix et pourvues chacune à leurs extrémités d'un plot de fixation, les plots de fixation d'un moyen d'appui coopérant avec les plots de fixation de l'autre moyen d'appui.

Les barres et les plots de fixation forment ainsi support pour les cellules élémentaires électrochimiques qui sont préalablement soudées entre elles de manière à être appliquées l'une sur l'autre par leurs faces principales. Pour plus de détails sur des techniques de soudage de cellules élémentaires, on pourra par exemple se référer à l'abrégé de la demande de brevet JP-A1-2004-253262.

Un tel support pour cellules élémentaires électrochimiques présente l'inconvénient de proposer un agencement nécessitant des opérations préalables de soudage des cellules élémentaires qui sont particulièrement longues, difficiles, et onéreuses. En outre, l'assemblage des plaques en appui l'une contre l'autre ne permet pas l'obtention d'un refroidissement efficace.

La présente invention a donc pour but de remédier à ces inconvénients, en proposant un module de génération d'électricité permettant l'assemblage de cellules élémentaires électrochimiques de manière particulièrement sûre, rapide, et efficace, tout en facilitant le refroidissement desdites cellules afin d'accroître les performances et la durée de vie du module.

Le module de génération d'électricité selon l'invention est décrit dans la revendication 1.

Avec un tel agencement, il devient dès lors possible d'obtenir un module de génération d'électricité dans lequel les cellules électrochimiques sont positionnées les unes par rapport aux autres de manière aisée et rapide, tout en assurant un refroidissement satisfaisant desdites cellules.

En effet, la prévision de tels plateaux ou plaques permet non seulement d'assurer le positionnement relatif des cellules mais également de conserver un espacement constant entre elles, en vue d'une circulation d'un gaz de refroidissement, par exemple d'air.

En outre, l'utilisation de moyens de mise en contrainte qui maintiennent par pression le positionnement relatif des cellules élémentaires et des plateaux de support permet de s'affranchir d'opérations assemblages des cellules entre elles particulièrement difficiles et onéreuses, telles que le soudage, ce qui facilite l'obtention d'un dispositif particulièrement économique.

De préférence, chaque plateau de support est associé à au moins deux cellules élémentaires disposées côte à côte.

Avantageusement, le module est pourvu d'éléments de friction montés entre les cellules élémentaires et les plateaux de support associés. De tels éléments de friction permettent d'accroître la sûreté de maintien en position des cellules élémentaires par rapport aux plateaux de support.

Dans un mode de réalisation préféré, les éléments de friction sont constitués par les plateaux de support, lesdits plateaux présentant une rugosité sensiblement supérieure à celle des cellules élémentaires.

Le module comprend au moins un élément déformable élastiquement monté en appui contre une cellule élémentaire supérieure.

L'utilisation d'un tel élément déformable élastiquement permet ainsi de s'affranchir d'éventuelles dilatations thermiques différentielles entre les cellules élémentaires, les plateaux de support, et les moyens de mise en contrainte. En outre, cet élément déformable élastiquement permet également d'absorber les défauts de tolérance sur l'épaisseur des cellules élémentaires, ainsi que des variations éventuelles de ladite épaisseur en fonction de la charge ou de la décharge de la cellule.

De préférence, l'élément déformable est réalisé en matière synthétique souple, les plateaux de support étant réalisés en matière synthétique rigide.

Les plateaux de support comprennent des moyens conducteurs d'électricité ou isolants.

Lesdits moyens peuvent être réalisés d'un seul tenant avec les plateaux de support, de manière à simplifier le montage du module.

De préférence, le module comprend une embase sur laquelle sont montés les moyens de mise en contrainte pour le positionnement relatif desdites cellules élémentaires et des plateaux de support.

Avantageusement, les plateaux de support sont constitués par assemblage d'un cadre de support des cellules et d'au moins une partie de connexion pour relier électriquement entre elles lesdites cellules.

La présente invention et ses avantages seront mieux compris à l'étude de la description détaillée d'un mode de réalisation pris à titre d'exemple nullement limitatif et illustré par les dessins annexés, sur lesquels :
- la figure 1 est une vue de dessus schématique d'un module de génération d'électricité selon un aspect de l'invention, et
- les figures 2 et 3 sont respectivement des sections selon les axes II-II et III-III du module de génération d'électricité de la figure 1.

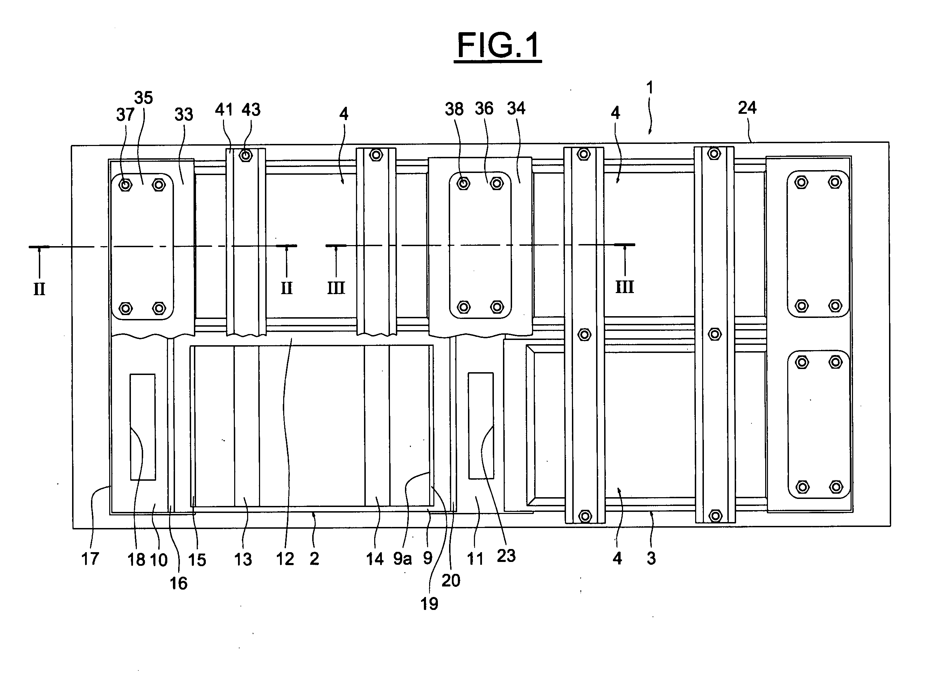

En référence aux figures 1 à 3, on va maintenant décrire un mode de réalisation du module de génération d'électricité, désigné par la référence numérique générale 1, et notamment destiné à un véhicule automobile électrique ou encore à un véhicule automobile hybride.

Le module 1 présente, en vue de dessus, une forme générale rectangulaire et comprend ici deux ensembles 2 et 3 connectés entre eux et pourvus chacun d'une pluralité de cellules 4 élémentaires électrochimiques identiques. Les cellules 4 sont agencées de manière à former, pour chacun des ensembles 2 et 3, deux rangées verticales identiques. Ainsi, les cellules 4 d'une rangée sont alignées horizontalement avec celles de l'autre rangée de manière à former des paires de cellules. Sur la figure 1, une des rangées de cellules 4 de l'ensemble 2 n'a pas été représentée, dans la zone inférieure gauche.

Pour produire de l'énergie, chaque cellule 4 comprend, de manière conventionnelle, une cathode 5 et une anode 6 séparées par un électrolyte 7. L'électrolyte 7 peut être constitué d'un séparateur polymère du type membrane, imbibé d'un polymère électrolyte liquide du type solvant organique avec sel de lithium.

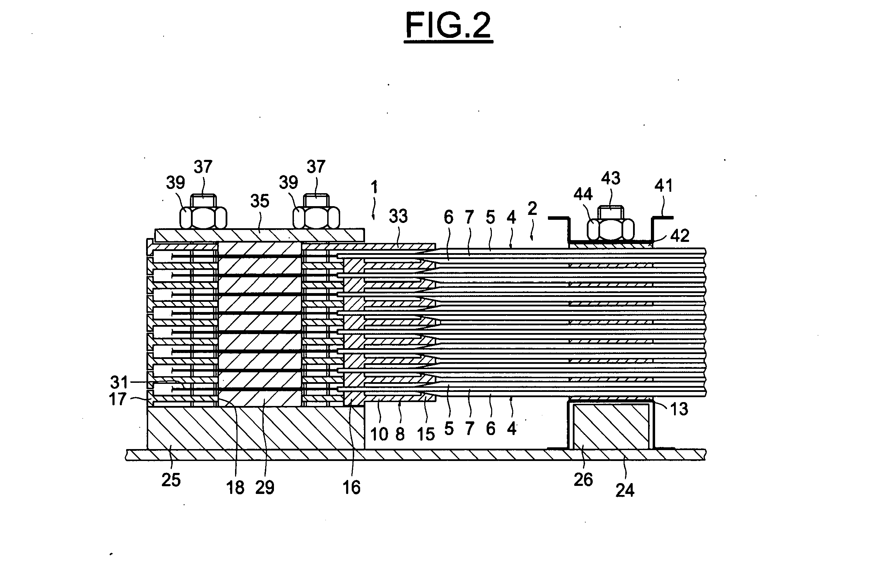

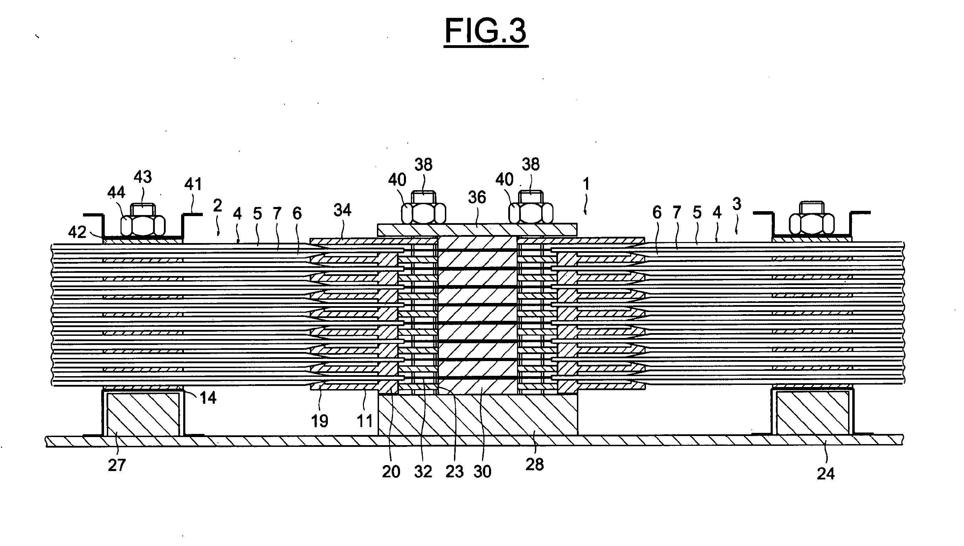

Pour la clarté des figures 2 et 3, les ensembles 2 et 3 ont été représentés avec chacun huit cellules 4 élémentaires. Bien entendu, le nombre de cellules généralement envisagé au total est sensiblement différent. En effet, la puissance nécessaire pour tracter un véhicule automobile est de plusieurs dizaines de kilowatts, ce qui nécessite d'empiler un grand nombre de cellules 4.

Pour l'ensemble 2 du module 1, à chaque paire de cellules 4 élémentaires est associé un plateau 8 de manière à assurer le support et le positionnement relatif de ces cellules 4. Les plateaux 8 de support, de forme générale rectangulaire, peuvent présenter une épaisseur relativement réduite par rapport à celles des cellules 4 afin d'obtenir un dispositif 1 compact. Ladite épaisseur peut par exemple être de l'ordre du millimètre.

Le plateau 8 est constitué d'un cadre 9 de support et deux pièces latérales 10, 11 sensiblement similaires qui s'assemblent sur ledit cadre, par exemple par encliquetage, pour former un ensemble unitaire.

Le cadre 9 de forme générale rectangulaire est pourvu d'une première bande 12 centrale reliant ses bords latéraux de grand côté, et de deuxième et troisième bandes 13, 14 reliant ses bords latéraux de petit côté et disposées chacune au voisinage d'un desdits bords de grand côté. La bande 12 délimite ainsi deux ouvertures 9a identiques, seulement une des ouvertures étant visible sur la figure 1. Ces ouvertures 9a permettent notamment de réaliser la connexion de bornes de cellules 4.

Le cadre 9 est pourvu, au niveau du bord latéral de grand côté opposé à l'ensemble 3, d'un rebord 15 vertical s'étendant vers le haut, et d'un bourrelet 16 vertical s'étendant de part et d'autre de faces principales dudit cadre. Le rebord 15 et le bourrelet 16 s'étendent sur toute la longueur du cadre 9. Le bourrelet 16 est ménagé sur le côté extérieur dudit bord du cadre 9. Le rebord 15 est situé sur le côté intérieur dudit bord et pourvu d'une surface tronconique supérieure.

Sur le bord latéral opposé de grand côté, le cadre 9 comprend également un rebord 19 et un bourrelet 20 similaires à ceux décrits précédemment. Les surfaces tronconiques des rebords 15, 19 sont destinées à supporter les faces inférieures d'une paire de cellules 4, les bourrelets 16, 20 formant appuis pour lesdites faces inférieures.

La pièce latérale 10 se présente sous la forme d'une plaque de forme générale rectangulaire, et prolonge horizontalement vers l'extérieur le cadre 9 à partir du bourrelet 16. Elle comprend une bordure 17 verticale ménagée sur le pourtour du bord extérieur de grand coté et des bords de petit côté. La bordure 17 s'étendant de part et d'autre des faces principales de la pièce 10. La pièce latérale 10 comprend également deux évidements 18 ménagés à proximité de la bordure 17 et associés chacun à une des rangées de cellules.

La pièce latérale 11 se présente également sous la forme d'une plaque rectangulaire, de structure toutefois légèrement différente à celle de la pièce latérale 10. En effet, la pièce latérale 11 est destinée à être utilisée pour une paire de cellules 4 de l'ensemble 2 mais également pour la paire correspondante de cellules 4 de l'ensemble 3. La pièce latérale 11 est donc commune aux ensembles 2 et 3 du module. Ainsi, la pièce 11 comprend deux bordures verticales (non référencées) ménagées sur le pourtour des bords de petit côté. La pièce 11 comprend également deux évidements 23 disposés de manière analogue à ceux de la pièce 10.

La conception de l'ensemble 3 est identique à celle de l'ensemble 2. Bien entendu, le nombre d'ensembles du module 1 est adaptable en fonction de la puissance ou de l'énergie désirée.

On va maintenant décrire l'agencement relatif des plateaux 8 de support et des cellules 4 élémentaires de l'ensemble 2.

Le plateau 8 de support inférieur est monté en appui contre une embase 24 par l'intermédiaire de plots 25 à 28. Les plots 25 à 28 sont respectivement en appui contre des faces inférieures du bourrelet 16 et de la bordure 17, de la bande 13, de la bande 14, et du bourrelet 20. La face principale inférieure de chacune des deux cellules 4 inférieures est en appui contre ledit plateau au niveau des surfaces supérieures des bandes 12 à 14 et des rebords 15, 19.

Le plateau 8 de support immédiatement supérieur vient en appui contre les faces principales supérieures des deux cellules 4 inférieures, respectivement par l'intermédiaire des faces inférieures des bourrelets 16, 20 et des bandes 12 à 14. Ledit plateau 8 forme ainsi support pour la cellule 4 immédiatement supérieure à la cellule élémentaire inférieure, mais également entretoise entre lesdites cellules de manière à maintenir un espacement sensiblement constant entre ces cellules et permettre ainsi une circulation de gaz pour le refroidissement.

Le positionnement des six autres plateaux 8 de support et cellules 4 de l'ensemble 2 est similaire à celui décrit précédemment. En outre, l'agencement relatif des plateaux 8 de support et des cellules 4 élémentaires de l'ensemble 3 est identique à celui de l'ensemble 2.

De manière à réaliser la connexion électrique des différentes cellules 4 entre elles, des moyens 29, 30 conducteurs ou isolants sont fixés respectivement à l'intérieur des évidements 18 et 23 de chacune des pièces 10, 11. L'utilisation de moyens 29, 30 conducteurs ou isolants est déterminée en fonction de la connexion électrique en série ou en parallèle désirée des cellules 4.

A cet effet, chaque cellule 4 comprend deux languettes de connexion 31 et 32 reliées à chacune de ses extrémités, et se présentant sous la forme de fines feuilles métalliques de largeur légèrement inférieure à la largeur de la cellule correspondante. Pour la clarté des figures, les languettes 31 et 32 sont ici reliées à l'électrolyte 7. Bien entendu, on conçoit aisément que chaque cellule 4 comprend en réalité une enveloppe extérieure (non représentée) à laquelle sont connectées les languettes 31 et 32.
représentées Les moyens 30 permettent de relier électriquement les cellules 4 de l'ensemble 3 avec les cellules de l'ensemble 2. Le cadre 9 permet ainsi de réaliser le support des cellules 4, les parties 10 et 11 étant prévues pour la connexion électrique desdites cellules entre elles.

Afin de maintenir le positionnement relatif des cellules élémentaires 4 et des plateaux 8 empilés de l'ensemble 2, le module 1 et comprend également des moyens de mise en contrainte par pression desdits plateaux et cellules. Les moyens de mise en contrainte sont pourvus de flasques 33, 34 en contact contre les cellules 4 supérieures, de plaques 35, 36 de pression associées aux flasques, et de tiges de fixation 37, 38.

Les flasques 33, 34 présentent des dimensions adaptées pour recouvrir respectivement les pièces 10, 11 latérales supérieures. Ils sont en appui contre les cellules 4 supérieures et comprennent chacun des évidements (non référencés) pour le passage des moyens 29, 30 supérieurs de manière que les faces supérieures desdits flasques soient décalées verticalement vers le bas par rapport à celles desdits moyens 29, 30.

A chaque flasque 33, 34 sont associés deux plaques 35, 36 de dimensions légèrement supérieures à celles des moyens 29, 30 et disposées de manière à venir en appui respectivement contre les surfaces supérieures des moyens 29, 30 supérieurs. Entre les plaques 35, 36 et les moyens d'appui 29, 30 supérieurs sont montées des barres métalliques (non représentées) pour assurer un contact électrique entre deux rangées de cellules 4 adjacentes.

Les tiges 37 de fixation filetées, ici au nombre de quatre, pour chaque plaque 35 passent à travers lesdites plaques ainsi qu'à travers les plateaux 8, par l'intermédiaire de perçages prévus à cet effet, et permettent d'assujettir les plateaux 8 de support et les cellules par rapport à l'embase 24, respectivement au niveau du plot 25. A cet effet, des écrous 39 sont montés sur lesdites tiges en appui contre les surfaces supérieures des plaques 35.

De manière analogue, les tiges 38 et des écrous 40 permettent de réaliser, par l'intermédiaire du flasque 34, la fixation des plateaux 8 et des cellules par rapport à l'embase 24, au niveau du plot 28. Le flasque 34 permet ainsi en partie la fixation des cellules de l'ensemble 2 et celle de l'ensemble 3. Du côté opposé au flasque 34, l'ensemble 3 comprend également un autre flasque (non référencé) pour la fixation de l'autre extrémité des cellules 4.

Pour chaque ensemble du module 1, les moyens de mise en contrainte sont pourvus également de deux barres d'appui 41 transversales venant en appui contre les surfaces supérieures des cellules supérieures, par l'intermédiaire d'éléments 42 déformables élastiquement. Les barres d'appui 42 sont identiques entre elles et présentent une longueur sensiblement égale à celles des grands côtés du cadre 9. Elles sont alignées verticalement par rapport aux plots 26 et 27.

Les éléments 42 déformables se présentent sous la forme de bandes rectangulaires de longueurs égales à celles des barres d'appui 41. Avantageusement, lesdits éléments sont réalisés en matière synthétique souple, par exemple en éthylène/propylène/monomère diénique (EPDM). Des tiges 43 filetées et des écrous 44, ici au nombre de trois sur chacune des barres 41, sont également prévus pour maintenir la fixation des plateaux 8 et des cellules 4 sur l'embase 24. Les extrémités inférieures des tiges 43 sont montées ici au niveau des plots 26 et 27.

La prévision de tels éléments 42 en appui contre les cellules 4 supérieures permet ainsi d'appliquer une pression sur les cellules 4 en vue de limiter sensiblement le risque d'un éventuel déplacement relatif des plateaux 8 et desdites cellules, tout en s'affranchissant d'éventuelles dilatations thermiques différentielles entre les cellules 4 élémentaires, les plateaux 8 de support, et les tiges 43. De tels éléments 42 permettent également d'absorber d'éventuelles variations d'épaisseurs des cellules en fonction de leurs charges ou décharges.

De manière à accroître la sûreté du maintien en position des plateaux 8 par rapport aux cellules 4 tout en conservant un module 1 compact, les plateaux 8 peuvent être réalisés en matière synthétique rigide, par exemple en polypropylène (PP) pour obtenir un coefficient de frottement entre lesdits plateaux et les cellules 4 adapté pour conserver par friction le positionnement horizontal des cellules 4 par rapport aux plateaux.

Bien entendu, il pourrait être également envisageable de prévoir des éléments spécifiques prévus à cet effet disposés entre les cellules 4 et les plateaux 8.

Le module de génération d'électricité permet ainsi d'obtenir un assemblage particulièrement aisé et fiable des différentes cellules élémentaires dans lequel les cellules sont notamment espacées les unes par rapport aux autres, ce qui permet de prévoir une circulation de gaz de refroidissement en vue d'un un fonctionnement optimal du module. En outre, le nombre d'ensembles du module ainsi que le nombre de cellules de chacun desdits ensembles peuvent être aisément adaptés en fonction de la puissance et de l'énergie souhaitées.

## Revendications

1. Module de génération d'électricité pourvu d'une pluralité de cellules élémentaires (4) électrochimiques, de plateaux de support (8) des cellules élémentaires, lesdits plateaux comprenant des moyens (29, 30) conducteurs d'électricité ou isolants pour relier électriquement des languettes de connexion des cellules élémentaires, et de moyens de mise en contrainte configurés pour maintenir par pression le positionnement relatif desdites cellules élémentaires et des plateaux de support et comprenant des plaques (35, 36) venant en appui contre les surfaces supérieures des moyens (29, 30) conducteurs d'électricité ou isolants supérieurs, **caractérisé en ce que** les plateaux de support forment des entretoises pour deux cellules élémentaires consécutives, **en ce qu'**il comprend des éléments (42) déformables élastiquement montés en appui contre les faces principales supérieures des cellules élémentaires supérieures, et **en ce que** les moyens de mise en contrainte comprennent en outre des flasques (33, 34) en contact contre les cellules élémentaires supérieures et des barres (41) d'appui transversales, lesdites barres (41) venant en appui contre les faces principales supérieures des cellules élémentaires supérieures par l'intermédiaire des éléments (42) déformables.

2. Module selon la revendication 1, dans lequel chaque plateau (8) de support supporte au moins deux cellules (4) élémentaires disposées côte à côte.

3. Module selon la revendication 1 ou 2, pourvu d'éléments de friction montés entre les cellules élémentaires et les plateaux de support associés.

4. Module selon la revendication 3, dans lequel les éléments de friction sont constitués par les plateaux de support, lesdits plateaux présentant une rugosité supérieure à celle des cellules élémentaires.

5. Module selon l'une quelconque des revendications précédentes, dans lequel les éléments déformables sont réalisés en matière synthétique souple, les plateaux de support étant réalisés en matière synthétique rigide.

6. Module selon l'une quelconque des revendications précédentes, comprenant une embase (24) sur laquelle sont montés les moyens de mise en contrainte pour le positionnement relatif desdites cellules élémentaires et des plateaux de support.

7. Module selon l'une quelconque des revendications précédentes, dans lequel les plateaux de support sont constitués par assemblage d'un cadre (9) de support des cellules et d'au moins une partie (10, 11) de connexion pour relier électriquement lesdites cellules entre elles.

## Claims

1. Electricity generation module provided with a plurality of basic electrochemical cells (4), support plates (8) for the basic cells, said plates comprising electricity conducting or insulating means (29, 30) for electrically linking connection tabs of the basic cells, and loading means configured to maintain the relative positioning of said basic cells and of the support plates by means of pressure and comprising plates (35, 36) bearing against the top surfaces of the top electricity conducting or insulating means (29, 30), **characterized in that** the support plates form spacers for two consecutive basic cells, **in that** it comprises elastically deformable elements (42) mounted to bear against the top main faces of the top basic cells, and **in that** the loading means also comprise flanges (33, 34) in contact against the top basic cells and transversal bearing bars (41), said bars (41) bearing against the top main faces of the top basic cells via the deformable elements (42).

2. Module according to Claim 1, in which each support plate (8) is associated with at least two basic cells (4) arranged side by side.

3. Module according to Claim 1 or 2, provided with friction elements fitted between the basic cells and the associated support plates.

4. Module according to Claim 3, in which the friction elements are the support plates, said plates having a roughness substantially greater than that of the basic cells.

5. Module according to any one of the preceding claims, in which the deformable elements are made of flexible synthetic material, the support plates being made of rigid synthetic material.

6. Module according to any one of the preceding claims, comprising a base (24) on which are fitted the loading means for the relative positioning of said basic cells and support plates.

7. Module according to any one of the preceding claims, in which the support plates are made up of an assembly of a support frame (9) for the cells and at least one connection part (10, 11) for electrically linking said cells to each other.

## Patentansprüche

1. Modul zur Elektrizitätserzeugung, das mit einer Vielzahl von elektrochemischen Elementarzellen (4), mit Trägerplatten (8) der Elementarzellen, wobei die Platten Elektrizität leitende oder isolierende Einrichtungen (29, 30) enthalten, um Anschlusszungen der Elementarzellen elektrisch zu verbinden, und Einrichtungen zum Einspannen versehen ist, die konfiguriert sind, um durch Druck die relative Positionierung der Elementarzellen und der Trägerplatten aufrechtzuerhalten und Platten (35, 36) enthalten, die gegen die oberen Flächen der Elektrizität leitenden oder isolierenden Einrichtungen (29, 30) in Auflage kommen, **dadurch gekennzeichnet, dass** die Trägerplatten Abstandshalter für zwei aufeinanderfolgende Elementarzellen bilden, dass es elastisch verformbare Elemente (42) enthält, die in Auflage gegen die oberen Hauptseiten der oberen Elementarzellen montiert sind, und dass die Einrichtungen zum Einspannen außerdem Flansche (33, 34) in Kontakt gegen die oberen Elementarzellen und Querauflagestangen (41) enthalten, wobei die Stangen (41) über die verformbaren Elemente (42) gegen die oberen Hauptseiten der Elementarzellen in Auflage kommen.

2. Modul nach Anspruch 1, bei dem jede Trägerplatte (8) mindestens zwei nebeneinander angeordnete Elementarzellen (4) trägt.

3. Modul nach Anspruch 1 oder 2, das mit Reibungselementen versehen ist, die zwischen den Elementarzellen und den zugeordneten Trägerplatten montiert sind.

4. Modul nach Anspruch 3, bei dem die Reibungselemente aus den Trägerplatten bestehen, wobei die Platten eine größere Rauigkeit als diejenige der Elementarzellen aufweisen.

5. Modul nach einem der vorhergehenden Ansprüche, bei dem die verformbaren Elemente aus einem elastischen Kunststoff hergestellt sind, während die Trägerplatten aus steifem Kunststoff hergestellt sind.

6. Modul nach einem der vorhergehenden Ansprüche, das eine Grundplatte (24) enthält, auf die die Einrichtungen zum Einspannen für die relative Positionierung der Elementarzellen und der Trägerplatten montiert sind.

7. Modul nach einem der vorhergehenden Ansprüche, bei dem die Trägerplatten aus dem Zusammenbau eines Trägerrahmens (9) der Zellen und mindestens eines Anschlussteils (10, 11) bestehen, um die Zellen elektrisch miteinander zu verbinden.
